# EUROPÄISCHE PATENTSCHRIFT

(11) **EP 0 897 361 B1**
(45) Veröffentlichungstag und Bekanntmachung des Hinweises auf die Patenterteilung: **12.02.2003**
(21) Anmeldenummer: 97923006.7
(22) Anmeldetag: 07.05.1997
(51) Int. Cl.: B62D 29/00, B62D 27/02, B62D 65/00

(54) **RAHMEN**
FRAME
CHASSIS

(30) Priorität: 07.05.1996 DE 19618258
(43) Veröffentlichungstag der Anmeldung: 24.02.1999
(73) Patentinhaber: Bayerische Motoren Werke Aktiengesellschaft, 80788 München (DE); NORSK HYDRO A/S, 0240 Oslo 2 (NO)
(72) Erfinder: LECHERMANN, Günther, D-85120 Hepberg (DE); SCHEUCHER, Klaus-Peter, D-80799 München (DE); CLAUSEN, Edvin, List, DK-6270 Toender (DK)
(74) Vertreter: Bücken, Helmut
(86) Internationale Anmeldenummer: EP9702342
(87) Internationale Veröffentlichungsnummer: WO97042069

(56) Entgegenhaltungen:
- EP-A- 0 568 251
- EP-A- 0 733 541
- EP-B- 0 146 716
- WO-A-94/19227
- DE-A- 3 343 682
- DE-A- 3 543 929
- DE-A- 4 139 305
- FR-A- 2 597 056
- "Pininfarina Ethos 2, la voiture de sport écolo" REVUE AUTOMOBILE, Bd. 88, Nr. 40, 30.September 1993, Seite 17 XP000392544
- NANBA, K ET ALL: "Application of Aluminum Honeycomb Sandwiches and Extrusions in a Convertible - Part 2: Production of a Platform" SAE TECHNICAL PAPER SERIES, Nr. 870148, Februar 1987, WARRENDALE, PA, USA, Seiten 1-9, XP002040568

## Beschreibung

Die Erfindung bezieht sich auf ein Verfahren zur Herstellung eines Rahmens, der aus einzelnen Bauteilen, bevorzugt aus Strangprofilen, besteht, die entlang von Anlageflächen miteinander verbunden sind sowie auf eine Bodengruppe eines Fahrzeugs.

Aus der DE 33 43 682 A1 ist ein Rahmen bekannt, der von einer Vielzahl von Bauteilen mit geschlossenem Querschnitt gebildet wird. Die einzelnen Bauteile werden zur Bildung einer Gitterstruktur abgelängt, gebogen und miteinander verschweißt.

Um Rahmen mit gleichbleibenden Abmessungen herstellen zu können, ist es erforderlich, Bauteile mit nur geringen maßlichen Abweichungen bereitzustellen. Die verwendeten dreidimensionalen Bauteile (Rohre mit geschlossenem Querschnitt) sind jedoch grundsätzlich toleranzbehaftet. Bei Rohren aus Leichtmetall-Strangprofilen differieren insbesondere die Wandstärken der Profilwände und die Maße der Strangprofile im Querschnitt ("maßstäblicher Fehler"). Daher ist es erforderlich, die Profile exakt aufeinander abzustimmen, wodurch die Herstellkosten steigen. Bei Verwendung von Profilen eines anderen Herstellers oder aus anderen Werkzeugen muß eine Neuabstimmung vorgenommen werden. Durch die Toleranzen entstehen zwangsläufig Spalte zwischen den einzelnen Bauteilen. Werden die Spalte bei Aluminium-Strangprofilen zu groß, so ist ein sicherer Schweißprozeß nicht mehr gewährleistet, da das Schweißbad aufgrund der geringen Viskosität der Schmelze durchfallen kann. Zu große Schweißspalte beeinflussen auch die Maßhaltigkeit des gesamten Rahmens, da in den Schweißnähten eine Schwindung von mindestens 30 % eintritt, die lokal ein Untermaß erzeugt. Daher müssen die Spaltmaße möglichst gering gehalten werden, wodurch der Fertigungsprozeß entsprechend aufwendig wird.

Aufgabe der Erfindung ist es, ein Verfahren bereitzustellen, mit dem Rahmen bei gleichzeitig hoher Maßhaltigkeit einfach und kostengünstig zu fertigen sind.

Diese Aufgabe wird durch die Merkmale des Anspruchs 1 gelöst. Anspruch 11 beschreibt einen Rahmen in Form einer Bodengruppe für ein Fahrzeug.

Kerngedanke des Verfahrens ist es, Ebenen für die Anlageflächen der einzelnen Bauteile zu definieren. Die einzelnen Ebenen ("Bezugsebenen") sind hierbei in ihrer absoluten Lage und in ihrer Lage zueinander mit sehr engen Maßtoleranzen festgelegt. Somit entstehen, abweichend vom Stand der Technik, Bezugsebenen, die Referenzebenen und Referenzmaße an bestimmten Flächen und Stellen des Rahmens bilden. Bauteile mit definierter Lage liegen mit wenigstens einer ihrer Außenflächen in einer Bezugsebene. Die Bezugsebenen stellen Ist-Größen da, im Gegensatz zu den gewünschten Soll-Größen bei bekannten Rahmen, bei denen durch Kettenmaße, Bauteiltoleranzen, Spaltmaße etc. sich über die Länge, Breite und Höhe eines Rahmens Abweichungen von einigen Millimetern ergeben können.

Bezugsebenen werden an den Stellen des Rahmens geschaffen, wo die Funktion oder das Erscheinungsbild des Rahmens dies erfordern. Bei Rahmen für Kraftfahrzeuge werden beispielsweise die Lage und die Größe der Türöffnung oder die Lage der Achsverschraubungspunkte durch Bezugsebenen für die betreffenden Rahmenbauteile mit geringen maßlichen Abweichungen festgelegt.

Das Konzept kann innerhalb einer Baugruppe, die auch aus einer Vielzahl von Bauteilen bestehen kann, durchgängig angewandt werden. Der Toleranzausgleich wird durch überlappende Verbindungen realisiert, so daß die Bauteile zum Längenausgleich gegeneinander verschoben werden können.

Das erfindungsgemäße Rahmenkonzept wird nachfolgend anhand der praktischen Anwendung in einer Schweißvorrichtung veranschaulicht: Zunächst werden diejenigen Bauteile des Rahmens, deren Lage durch konstruktiv festgelegte Bezugsebenen definiert ist, in die Schweißvorrichtung eingelegt. Diese und weitere Bauteile des erfindungsgemäßen Rahmens lassen sich, auch bei maßlichen Abweichungen, immer in die Vorrichtung einspannen, da eventuell auftretende Bauteiltoleranzen durch Verschieben der einzelnen Bauteile ausgeglichen werden können. Neben der gewährleisteten Fügbarkeit des Rahmens wird durch die Möglichkeit, die Bauteile ohne Spalt aneinander schieben zu können, eine hohe Maßhaltigkeit und eine minimale Schwindung in den Schweißnähten erreicht. Auch bei Verwendung von Strangprofilen aus anderen Werkzeugen ist eine Neuabstimmung der Schweißvorichtung nicht erforderlich, da der maßstäbliche Fehler der Profile ausgeglichen werden kann. Durch die geringere Anzahl der im Fertigungsprozeß zu überwachenden Einflußparameter vereinfacht sich die Kontrolle des Herstellprozesses.

Aus der FR 2 597 056 A1 ist ein Rahmen bekannt, der aus zwei Längsträgern besteht, die über Querträger miteinander verbunden sind. Die Querträger weisen Flansche auf, die von Befestigungsschrauben durchsetzt sind, deren Nutensteine in T-Nuten der Längsträger eingreifen. Durch Verschiebung der Querträger entlang der T-Nuten kann zwar die Position der Querträger verändert werden. Im Unterschied zum erfindungsgemäßen Verfahren ist jedoch kein Toleranzausgleich in Längsrichtung der Querträger möglich, da keine Überlappung zwischen Längs- und Querträgern vorliegt. Maßlich eng tolerierte Bezugsebenen sind nicht definiert.

Gleiches gilt auch für den aus der DE 35 43 929 A1 bekannten Rahmen, der ebenfalls keine überlappenden Verbindungen aufweist. Ein Ausgleich fertigungsbedingter Längenabweichungen ist auch hier nicht möglich. Maßlich eng tolerierte Bezugsebenen sind nicht definiert.

Anlageflächen, die parallel zueinander verlaufen, stellen den einfachsten Fall eines erfindungsgemäßen Rahmens dar (Anspruch 2). Eingeschlossen ist der Sonderfall von Anlageflächen in einer Ebene. Bei Rahmen gemäß Anspruch 2 ist ein Toleranzausgleich in den zwei Raumrichtungen der Bezugsebene bzw. der Scharen von Bezugsebenen möglich. Erfindungsgemäße Rahmen mit parallelen Anlageflächen sind in einer Vielzahl von Fällen realisierbar. Die Bauteile können dabei geradlinig verlaufen oder zweidimensional gebogen sein.

Die Bezugsebenen befinden sich in festgelegten Ebenen bzw. in festgelegten Scharen paralleler Ebenen. Die Grundidee des erfindungsgemäßen Rahmenkonzepts liegt in der einheitlichen Verschieberichtung für den Toleranzausgleich, da die Verschiebung nur in festgelegten Ebenen erfolgt. Durch dieses Konzept wird trotz der Verschiebung einzelner Bauteile die Lage anderer Bauteile nicht verändert oder es können die durch die Verschiebung auftretenden Abweichungen an anderer Stelle ohne weiteres wieder ausgeglichen werden.

Bei zwei sich schneidenden (Scharen von parallelen) Ebenen ist ein eindimensionaler Toleranzausgleich entlang der Schnittgerade der Ebenen möglich (Anspruch 3). Die beiden Ebenen können schiefwinklig, aber auch rechtwinklig zueinander verlaufen.

Selbstverständlich können Rahmen aus mehreren Baugruppen, auch aus unterschiedlich konzipierten Baugruppen sowohl nach Anspruch 2 als auch nach Anspruch 3, aufgebaut sein.

Komplexere Strukturen lassen sich mit Anlageflächen in einer dritten Schar paralleler Ebenen realisieren, deren Winkel zu den beiden anderen Ebenen beliebig gewählt werden kann. Da sich bei dieser Konstellation bei einer Bauteilverschiebung jedoch die Lage der einzelnen Bauteile gegenseitig beeinflussen würde, ist es gemäß Anspruch 4 besonders zweckmäßig, die dritte Ebene von Anlageflächen senkrecht zur Schnittgerade der beiden anderen Ebenen zu wählen. Damit wird bei einem Toleranzausgleich eine gegenseitige Beeinflussung vermieden.

Anspruch 5 beschreibt den Sonderfall von Anlageflächen in einem rechtwinkligen räumlichen Koordinatensystem mit einer X-, Y- und Z-Achse. Werden die Hauptachsen des Rahmens so ausgerichtet, daß die Anlageflächen der Bauteile des Rahmens in Richtung der Koordinatenachsen verlaufen, so können die einzelnen Bauteile ohne gegenseitige Beeinflußung beliebig gegeneinander verschoben werden.

Anspruch 6 beschreibt die bevorzugte Verbindung der Bauteile durch Verschweißung.

Die beiden aneinandergrenzenden Wände eines Bauteils können gemäß Anspruch 7 ohne weiteres Anlageflächen in Bezugsebenen bilden, da sich insbesondere Strangprofile durch eine hohe Winkeltreue auszeichnen. So können beispielsweise Steg und Schenkel eines U-Profils oder die beiden aneinanderstoßenden Seitenteile eines Rechteckprofils in Bezugsebenen gelegt werden.

Die Winkeltreue von Strangprofilen, beispielsweise Rechteckprofilen, gewährleistet zwar, daß aneinander grenzende Profilwände mit sehr geringen Winkelabweichungen zueinander verlaufen. Der maßstäbliche Fehler bedingt jedoch, daß der Abstand gegenüberliegender Wände in größerem Maße toleranzbehaftet ist. Hier geht die volle Herstelltoleranz ein, die bei Strangprofilen für Rahmen von Kraftfahrzeugen in der Größenordnung von 1 mm liegt. Daher wird gemäß Anspruch 8 vorgeschlagen, bei Bauteilen mit einander gegenüberliegenden Anlageflächen eine der Anlageflächen beispielsweise durch Fräsen oder Beschneiden teilweise oder vollständig zu entfernen. Wird die Bearbeitung mit einer CNC-Werkzeugmaschine durchgeführt, so ergibt sich eine Genauigkeit im Bereich von 0,1 mm. Durch die Bearbeitung wird erreicht, daß die gegenüberliegenden Anlageflächen sich in das Raster der Bezugsebenen exakt einfügen. Die Bearbeitung gemäß Anspruch 8 erhöht zwar die Herstellkosten, da ein weiterer Bearbeitungsschritt notwendig ist. Durch die Bearbeitung wird jedoch gewährleistet, daß das Konzept eines Rahmens mit festgelegten Bezugsebenen durchgängig realisiert werden kann. Ziel ist es dabei, einen erfindungsgemäßen Rahmen so zu gestalten, daß derartige Bearbeitungsschritte nur an wenigen Bauteilen erforderlich sind.

Bei der Verbindung einzelner Bauteile eines Rahmens können "Blocksituationen", d. h. nicht ausgleichbare Toleranzen, vorliegen, wenn zwei Bezugsebenen in einen fest vorgegebenen Abstand ohne Möglichkeit einer überlappenden Verbindung aneinander angebunden werden. Auch hier wird das verbindende Bauteil gemäß Anspruch 9 so bearbeitet, daß es sich mit einer exakt bemessenen Länge in das Raster der Bezugsebenen einfügt. Die Bearbeitung, meistens ein einfacher, ebener Beschnitt in der Länge, wird vorzugsweise am Ende der Bauteilbearbeitung (Biegen, Bohren etc.) durchgeführt. Ebenso können die beschriebenen Blocksituationen auch bei der Verbindung einzelner Baugruppen untereinander auftreten.

Durch Mehrkammer-Hohlprofile (Anspruch 10) können abgestufte Bauteilhöhen entlang der Längserstreckung des Strangprofils realisiert werden. Bevorzugt werden im Verbindungsbereich mit anderen Bauteilen einzelne Kammern auf einem Teil ihrer Länge entfernt. Durch Bearbeitung mit CNC-Werkzeugmaschinen sind wiederum sehr geringe Bauteiltoleranzen möglich. Die Hohlprofile zeichnen sich, auch bei Entfernen einer Kammer, durch eine hohe verbleibende Steifigkeit aus. Es besteht darüber hinaus die Möglichkeit, die Wände einer Kammer teilweise zu belassen, so daß die verbleibenden Stege ein Bauteil zwischen sich aufnehmen können. Die Stege dienen hierbei der Führung, so daß wiederum eine überlappende Verbindung mit der Möglichkeit eines Toleranzausgleiches erzeugt werden kann. Entlang der Stege, die als Verbindungsflansche dienen, kann eine Verschweißung in einfacher Weise erfolgen. Alternativ können die beschnittenen Profile auch stumpf aneinandergelegt und miteinander verschweißt werden. Die Maßhaltigkeit wird hierbei durch den genauen Beschnitt erreicht. Das beschriebene Herstellverfahren für Rahmen ist kostengünstig, da mit einem in großen Stückzahlen hergestellten Mehrkammer-Hohlprofil durch einfaches Entfernen einer oder mehrerer Kammern Bauteile mit unterschiedlichen Formen und Abmessungen hergestellt werden können.

Anspruch 11 beschreibt einen Rahmen in Form einer Bodengruppe für ein Fahrzeug. Bodengruppen zeichnen sich durch ausgeprägte Trägerstrukturen aus und weisen beispielsweise Motor- und Tunnellängsträger, seitliche und hintere Längsträger sowie quer zur Fahrtrichtung verlaufende Träger auf. Eine derartige Bodengruppe ist beispielsweise aus der EP 0 146 716 B1 bekannt. Die Verbindung zwischen den einzelnen Längsträgerabschnitten erfolgt hier durch Gußknotenelemente, die jedoch teuer in der Herstellung sind. Demgegenüber kann bei der erfindungsgemäßen Bodengruppe nach Anspruch 11 die Verbindung durch kostengünstiges direktes Verschweißen der einzelnen Strangprofile erreicht werden. Die Träger der Bodengruppe liegen entlang von im wesentlichen horizontalen Ebenen aneinander. Die Träger verlaufen im Überlappungsbereich geradlinig oder sind zweidimensional gebogen, so daß sich ebenflächige Anlagen ergeben. Die Strangprofile können ohne weitere Formgebung bzw. durch zweidimensionales Biegen in einfachen Biegewerkzeugen hergestellt werden. Durch das direkte Aufeinanderlegen der Träger mit anschließender Verschweißung im Überlappungsbereich ist ein einfacher Toleranzausgleich in Längs- und Querrichtung des Fahrzeugs möglich.

Die WO-A-94/19227 zeigt eine Fahrzeugteilstruktur mit verbessertem Crashverhalten, mit Längsträgern und einem Querträger, wobei die Endbereiche des Querträgers so abgebogen sind, dass sie entlang eines Verbindungsbereichs gleichgerichtet mit den Endabschnitten des Längsträgers verlaufen. Im Verbindungsbereich sind die Profile der Längsträger und des Querträgers nebeneinander, schräg versetzt oder übereinander angeordnet.

Die Träger der einzelnen Fahrzeugabschnitte sind überwiegend als Längsträger ausgebildet, können jedoch, zumindest abschnittsweise, auch quer zur Fahrtrichtung verlaufen. Der Begriff Träger umfaßt auch aus mehreren Trägern zusammengesetzte Trägerstrukturen.

Die beschriebene Bodengruppe eignet sich vor allem für Geländefahrzeuge, da diese relativ hoch angesetzte mittlere Träger aufweisen, die ein direktes Aufsetzen der vorderen und/oder hinteren Träger ohne Zwischenstücke erlauben. Selbstverständlich ist es aber auch möglich, zwischen die einzelnen Träger Distanzprofile einzubringen, um die gewünschten Verbindungsebenen zu erreichen. Damit ergeben sich jedoch im Vergleich zur direkten Überlappung höhere Herstellkosten.

Bei Verwendung von Mehrkammer-Hohlprofilen kann die Lage der Verbindungsebenen in Richtung der Fahrzeughochachse durch einfaches Abtrennen einer oder mehrerer Kammern variiert werden. Durch die Überlappung im Verbindungsbereich ist trotz der abgetrennten Kammer eine ausreichende Steifigkeit gegeben. Die unterschiedliche Lage der Verbindungsebenen in Richtung der Fahrzeughochachse ergibt sich aus dem Package des Fahrzeuges bzw. durch die Anbindung von Motor, Getriebe und Radaufhängung an die Karosserie. Die Lage der Verbindungsebenen kann sowohl durch einen Beschnitt des mittleren Trägers als auch der Träger der Fahrzeugendabschnitte verändert werden.

Durch das erfindungsgemäße Verfahren können Rahmen nach folgendem Ablauf hergestellt werden: Die Bauteile des Rahmens werden zunächst mit ihren definierten Anlageflächen in die Bezugsebenen (aufgrund der Funktion oder des Erscheinungsbildes festgelegt) gebracht, wobei diese Lage durch entsprechende Verschiebung der Bauteile in Bezugsebenen, bevorzugt entlang einer überlappenden Verbindung mit Bauteilen einer anderen Baugruppe, erreicht wird. Anschließend werden die Bauteile in der Bezugsebene (oder mehreren Bezugsebenen) und/oder entlang der Überlappung mit den benachbarten Bauteilen verbunden, z. B. durch Verschweißung.

Mögliche Ausführungsbeispiele der Erfindung sind nachfolgend in der Zeichnung näher dargestellt und erläutert. Es zeigt:
- Figur 1: eine Hälfte eines erfindungsgemäßen Rahmens eines Fahrzeuges in der Draufsicht,
- Figur 2: eine der Figur 1 entsprechende Seitenansicht,
- Figur 3: den Rahmen eines weiteren Fahrzeuges in der Seitenansicht,
- Figur 4: eine perspektivische Teilansicht auf den vorderen Bereich des Fahrzeugs von Figur 3,
- Figur 5: eine perspektivische Teilansicht auf den hinteren Bereich des Fahrzeuges von Figur 3,
- Figur 6: einen Querschnitt durch den Verbindungsbereich zwischen vorderem und mittlerem Längsträger entlang der Schnittverlaufslinie VI - VI in Figur 3,
- Figur 7: einen Querschnitt durch den mittleren Längsträger entlang der Schnittverlaufslinie VII - VII in Figur 3 und
- Figur 8: einen Längsschnitt durch den hinteren Bereich des Fahrzeugs.

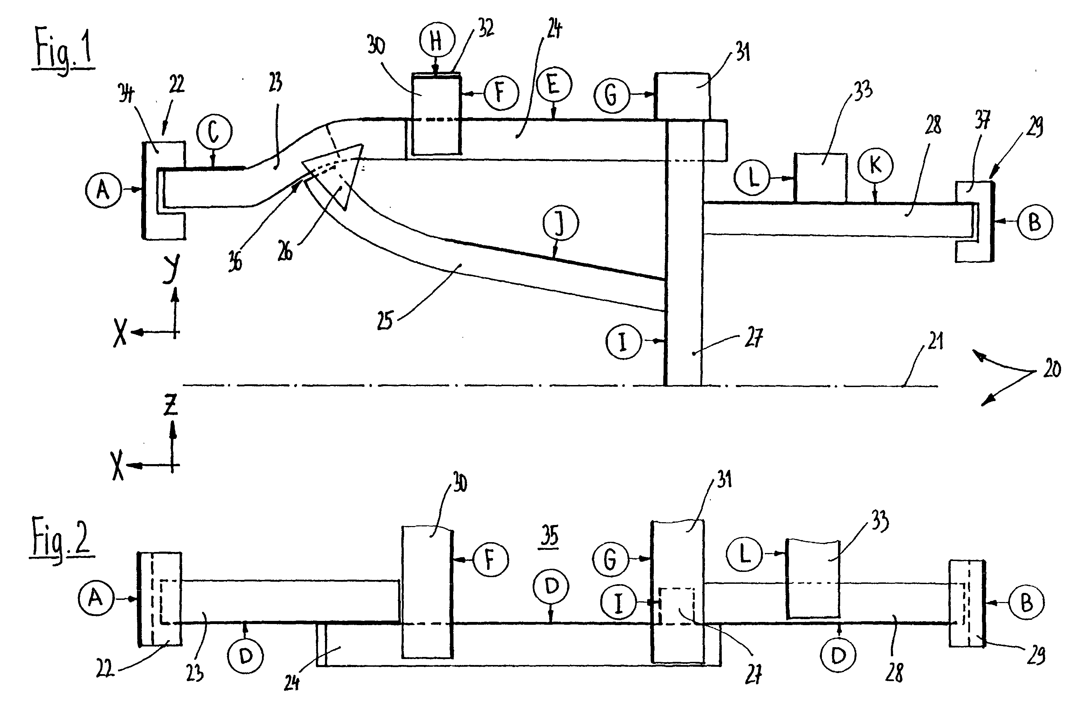

Die Figuren 1 und 2 zeigen in schematischer Darstellung den Rahmen 20 eines Fahrzeugs. Der Rahmen 20 ist symmetrisch zur Mittellängsachse 21 aufgebaut. In Figur 1 ist lediglich die rechte Rahmenseite dargestellt. Der Rahmen 20 besteht aus einer Aufnahme 22 für einen vorderen Pralldämpfer, an die sich ein Motorträger 23 anschließt, der in einen seitlichen Längsträger 24 (Schweller) übergeht. Etwa parallel zum Schweller 24 verläuft ein Tunnelträger 25, der mit dem Motorträger 23 über ein Knotenblech 26 verbunden ist. Ein Querträger 27 verbindet die beiden Fahrzeughälften. An den Querträger 27 schließt sich ein hinterer Längsträger 28 an, der in eine Aufnahme 29 für einen hinteren Pralldämpfer mündet. Am Schweller 24 ist eine A-Säule 30 sowie eine B-Säule 31 angeordnet. Die A-Säule 30 trägt eine Hälfte 32 eines Türschamiers. Am hinteren Längsträger 28 ist eine Aufnahme 33 für ein hinteres Federbein angeordnet.

Aus den Figur 1 und 2 geht hervor, daß die einzelnen Träger mit Ausnahme des Tunnelträgers 25 rechtwinklig zueinander in einem kartesischen Koordinatensystem mit Achsen in X-, Y- und Z-Richtung angeordnet sind. Die einzelnen Anlageflächen sind durch Linien größerer Strichstärke dargestellt. Die Bezugsebenen sind durch eingekreiste Buchstaben bezeichnet.

Die Gesamtlänge des Rahmens 20 wird einerseits durch die Bezugsebene A an der Aufnahme 22 und andererseits durch die Bezugsebene B an der hinteren Aufnahme 29 festgelegt. Die Bezugsebenen A und B verlaufen jeweils in vertikalen Ebenen in Fahrzeugquerrichtung (Y-Z-Ebene). Die von Motorträger 23, Schweller 24 und hinterem Längsträger 28 gebildete Baugruppe kann zum Ausgleich von Fertigungstoleranzen zwischen den Bezugsebenen A und B verschoben werden. Hierzu ist der Motorträger 23 überlappend mit dem äußeren Schenkel 34 der Aufnahme 22 verbunden. Die Überlappung erfolgt in der vertikalen, in Fahrzeuglängsrichtung verlaufenden Bezugsebene C (X-Z-Ebene), so daß zwischen Motorträger 23 und dem äußeren Schenkel 34 ein Toleranzausgleich in X- und Z-Richtung erfolgen kann.

Motorträger 23 und Schweller 24 überlappen einander ebenfalls, so daß hier ein weiterer Längenausgleich in X-Richtung erfolgen kann. In Z-Richtung des Fahrzeugs ist der Motorträger 23 durch die Bezugsebene D festgelegt. Die Bezugsebene D erstreckt sich über die gesamte Fahrzeuglänge und legt außerdem den Motorträger 23, den Schweller 24 und den hinteren Längsträger 28 in Z-Richtung fest. Vor dem Verbinden der einzelnen Rahmenteile ist daher die Baugruppe aus Motorträger 23, Schweller 24 und Längsträger 28 in vertikaler Richtung so auszurichten, daß die vorgebene Bezugsebene D eingenommen wird.

Die bereits beschriebene Bezugsebene D sowie die Bezugsebene E an der Außenseite des Schwellers 24 und die einander zugewandten Bezugsflächen F und G an der A- und B-Säule 30 bzw. 31 legen den Türausschnitt 35 fest. Hierdurch ergeben sich für die nicht dargestellte Tür gleichbleibende Spaltmaße zur umgebenden Karosserie. Zur Einhaltung der Bezugsebenen E und F können die Säulen 30 und 31 in Fahrzeuglängsrichtung (X-Richtung) verschoben werden. Zusätzlich kann die B-Säule 31 in Z-Richtung verschoben werden.

Die A-Säule 30 nimmt mit ihrer Außenseite (Bezugsfläche H) die Scharnierhälfte 32 auf. Die parallel zueinander verlaufenden Bezugsebenen E und H schließen die Verwendung eines unbearbeiteten Strangprofils für die A-Säule aus, da durch die unvermeidlichen Schwankungen in der Breite der Profils der A-Säule 30 die Einhaltung eines gleichbleibenden Abstandes zwischen den Bezugsebenen E und H nicht gewährleistet werden kann. Daher ist am unteren Endabschnitt der A-Säule 30 mit einer Werkzeugmaschine mit entsprechend hoher Bearbeitungsgenauigkeit ein rechtwinkliger Ausschnitt entfernt. Durch dieses Entfernen eines eckförmigen Abschnitts der A-Säule 30 ergibt sich eine L-förmige Anlage der A-Säule 30 an den Bezugsebenen D und E des Schwellers 24, mit dem Ergebnis einer exakten Positionierung der A-Säule 30 in der Höhe (Z-Richtung) und einem exakt eingehaltenen Abstandsmaß zwischen den Bezugsebenen E und H.

Die Bezugsebenen E und F verlaufen rechtwinklig zueinander. Durch die große Winkeltreue von Strangprofilen wird gewährleistet, daß auch die Bezugsebenen E und G der B-Säule 31 mit nur sehr geringen Abweichungen rechtwinklig zueinander verlaufen.

Der Querträger 27 verbindet die beiden Fahrzeughälften. Er ist bezüglich seiner Lage in X-Richtung des Fahrzeugs durch die Bezugsebene I festgelegt. Da er zwischen den Bezugsebenen E der Schweller 24 der beiden Fahrzeughälften nahezu spaltfrei eingepaßt ist, um eine Verschweißung mit minimaler Schwindung in der Schweißnaht zu gewährleisten, muß der Querträger 27 mit exakter Länge hergestellt werden.

Zwischen dem Motorträger 23 und dem Querträger 27 verläuft der Tunnelträger 25, der gegenüber der X-Achse um einen Winkel a = 10 ° geneigt ist. Demzufolge ist auch der hintere Endabschnitt des Tunnelträgers 25, der an der im Koordinatensystem liegenden Bezugsebene 1 zur Anlage kommt, entsprechend abgeschrägt. Die äußere Wand des Tunnelträgers 25 bildet eine unter dem Winkel a zu einer X-Z-Ebene verlaufende Bezugsebene J für nicht dargestellte weitere Bauteile. Der Tunnelträger 25 wird direkt an den Querträger 27 angelegt und mit ihm verbunden. Das Knotenblech 26 schafft einen Toleranzausgleich zwischen dem Motorträger 23 und dem Tunnelträger 25, die nicht direkt miteinander verschweißt sind. Der verbleibende Spalt 36 wird durch das Knotenblech 26 überdeckt.

An den Querträger 27 schließt sich der hintere Längsträger 28 an. Der hintere Längsträger 28 bildet an seiner Außenseite eine Bezugsfläche K. Die überlappende Verbindung mit dem äußeren Schenkel 37 der hinteren Aufnahme 29 ermöglicht einen Toleranzausgleich in X-und Z-Richtung des Fahrzeugs. An die Bezugsebene K ist die Aufnahme 33 für das hintere Federbein angelegt. Die Aufnahme 33 weist an ihrer Vorderseite eine Bezugsebene L für die Anbindung der nicht dargestellten Hinterachse auf.

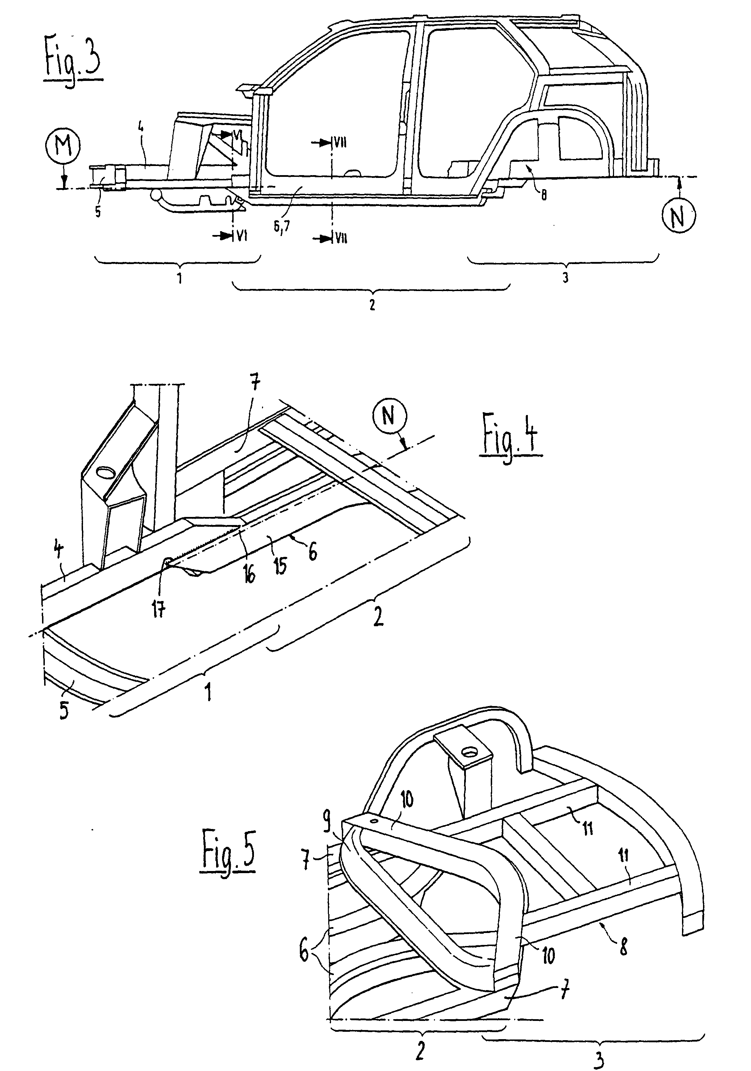

Die Figuren 3 bis 8 zeigen ein weiteres Beispiel eines erfindungsgemäßen Rahmens für eine Kraftfahrzeug.

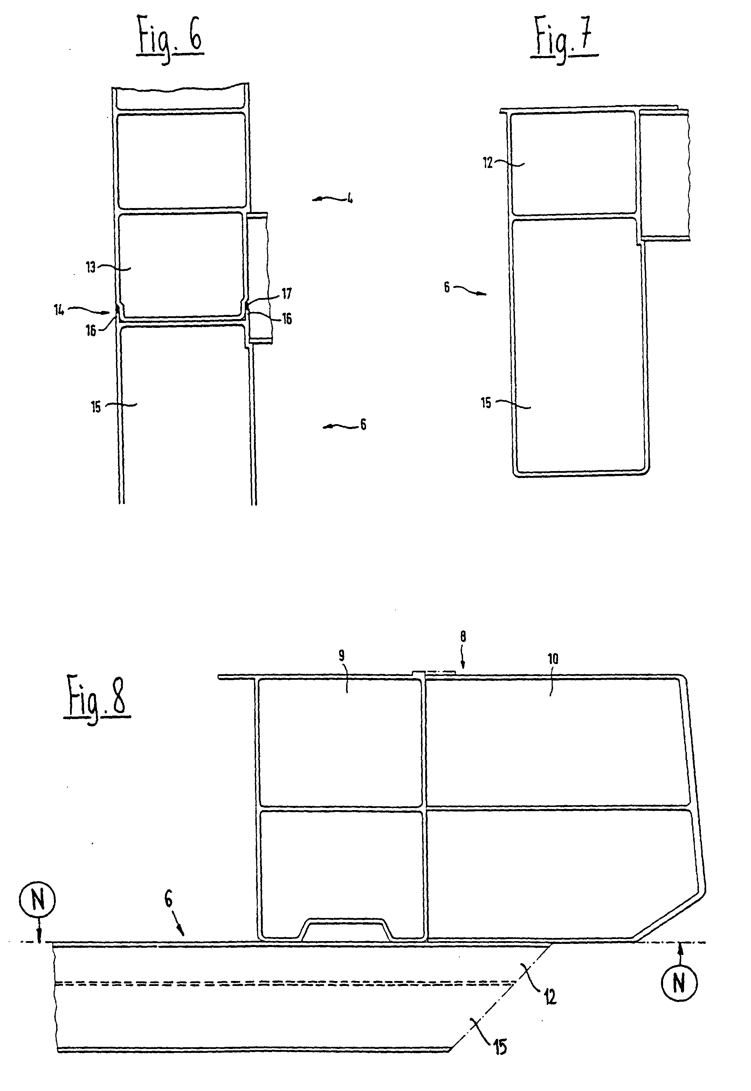

Figur 3 zeigt die tragende Struktur eines Fahrzeuges, die aus Strangprofilen aus Leichtmetall aufgebaut ist. Die Struktur ist in einen vorderen Bereich 1 (Motorraum), einen mittleren Bereich 2 (Fahrgastzelle) und einen hinteren Bereich 3 (Kofferraum) unterteilt. Nachfolgend soll insbesondere auf die Bodengruppe des Fahrzeugs eingegangen werden. Wie auch Figur 4 näher zeigt, besteht die Bodengruppe (nur rechte Hälfte dargestellt) im vorderen Bereich 1 aus vorderen Trägern 4 (Motorlängsträger; nur rechter Träger dargestellt), die an ihrem vorderen Ende über einen Stoßfängerträger 5 miteinander verbunden sind. An die Motorlängsträger 4 schließen sich unterseitig mittlere Längsträger 6 an. Die Verbindungsebene (Bezugsebene) zwischen dem Motorlängsträger 4 und dem mittleren Längsträger 6 ist mit M bezeichnet.

Im mittleren Bereich wird die Bodengruppe von den mittleren Längsträgern 6 sowie seitlichen Längsträgern 7 gebildet. An diese schließt sich, wie insbesondere aus Figur 5 hervorgeht, eine hintere Trägerstruktur 8 an, die von zwei Hinterachsquerträgern 9 und 10 sowie hinteren Längsträgern 11 gebildet wird. Die hintere Trägerstruktur 8 ist auf die Oberseite der mittleren Träger 6 und 7 aufgesetzt. Die Verbindungsebene (Bezugsebene) zwischen den Trägern 6 und 7 sowie der Trägerstruktur 8 ist mit N bezeichnet (siehe Figur 3).

Figur 3 verdeutlicht, daß die Bezugsebene M tiefer liegt als die Bezugsebene N. Dieser Höhenversatz wird durch das teilweise Entfernen der oberen Kammer 12 des mittleren Längsträgers 6 erreicht, wie nachfolgend näher beschrieben wird.

Die Figuren 4 und 6 zeigen die Verbindung zwischen dem vorderen und dem mittleren Bereich 1 bzw. 2 der Bodengruppe im einzelnen: Motorlängsträger 4 und mittlerer Längsträger 6 bestehen aus Mehrkammerprofilen. Im Bereich der Überlappung zwischen den Trägern 4 und 6 ist die obere Kammer 12 des mittleren Längsträgers 6 nahezu vollständig entfernt. Die verbleibenden flanschartigen Stege 16 der horizontalen Wände der Kammer 12 nehmen den Motorlängsträger 4 formschlüssig zwischen sich auf. Die Verbindung erfolgt über Längsschweißnähte 17. Für die Formschlußverbindung ist die untere Kammer 13 des Motorlängsträgers 4 etwas eingezogen (Bereich 14).

Figur 7 zeigt den durchgehenden Verlauf des mittleren Längsträgers 6 mit seiner oberen und seiner unteren Kammer 12 bzw. 15 im Bereich 2 der Bodengruppe des Fahrzeugs.

Die Figuren 5 und 8 zeigen die Verbindung zwischen dem mittleren und dem hinteren Bereich 2 bzw. 3 der Bodengruppe näher: Die Hinterachsquerträger 9 und 10 weisen eine ebenflächige Unterseite auf. Mit dieser ebenen Anlagefläche werden sie auf die ebenflächige Oberseite der mittleren und seitlichen Längsträger 6 und 7 aufgesetzt und mit diesen verschweißt. Dabei kann in einfacher Weise ein Toleranzausgleich in Längs- und Querrichtung (X- bzw. Y-Richtung) des Fahrzeugs erfolgen. Die Anlagefläche N befindet sich an der Oberseite der oberen Kammer 12 des mittleren Längsträgers 6, die hier nicht entfernt ist.

## Patentansprüche

1. Verfahren zur Herstellung eines Rahmens (20), der aus einzelnen Bauteilen, bevorzugt Strangprofilen, besteht, die entlang von Anlageflächen (A bis N) miteinander verbunden sind,
**dadurch gekennzeichnet, dass**
- zunächst diejenigen ersten Bauteile des Rahmens, deren Lage durch konstruktiv festgelegte Bezugsebenen (A bis N) definiert ist, in eine Vorrichtung eingespannt werden, wobei zumindest ein Teil der Bezugsebenen (A bis N) Anlageflächen für weitere Bauteile bildet,
- anschließend die weiteren Bauteile in die Vorrichtung eingesetzt werden, nachdem sie durch Verschiebung entlang überlappender, von den Bezugsebenen (A bis N) gebildeten Anlageflächen in ihre Solllage gebracht worden sind und
- abschließend die Bauteile miteinander verbunden werden.

2. Verfahren nach Anspruch 1,
**dadurch gekennzeichnet, daß** die Bauteile Baugruppen bilden, innerhalb derer die Anlageflächen in einer Schar paralleler Ebenen verlaufen, wobei vor dem Verbinden die weiteren Bauteile in der Ebene der jeweiligen Anlagefläche verschoben werden.

3. Verfahren nach Anspruch 1,
**dadurch gekennzeichnet, daß** die Bauteile Baugruppen bilden, innerhalb derer die Anlageflächen in zwei sich schneidenden Scharen paralleler Ebenen verlaufen, wobei vor dem Verbinden die weiteren Bauteile entlang der Schnittgerade der jeweiligen Ebenen verschoben werden.

4. Verfahren nach Anspruch 3,
**dadurch gekennzeichnet, daß** wenigstens eine weitere Anlagefläche in einer Schar von Ebenen senkrecht zur Schnittgerade verläuft.

5. Verfahren nach Anspruch 4,
**dadurch gekennzeichnet, daß** die Anlageflächen in drei senkrecht zueinander stehenden Scharen paralleler Ebenen verlaufen.

6. Verfahren nach einem der vorangegangenen Ansprüche,
**dadurch gekennzeichnet, daß** die Verbindung durch Schweißen erfolgt.

7. Verfahren nach einem der vorangegangenen Ansprüche,
**dadurch gekennzeichnet, daß** zwei aneinandergrenzende Wände eines Bauteils (31; 33) Anlageflächen (E, G; K, L) bilden.

8. Verfahren nach einem der vorangegangenen Ansprüche,
**dadurch gekennzeichnet, daß** die einer Anlagefläche (H) eines Bauteils (30) gegenüberliegende Wand desselben Bauteils (30) eine weitere Anlagefläche (E) bildet, die zur Einhaltung eines vorgegebenen Abstandsmaßes durch spanende Bearbeitung zumindest teilweise entfernt wird.

9. Verfahren nach einem der vorangegangenen Ansprüche,
**dadurch gekennzeichnet, daß** zwischen den Anlageflächen (E) zweier Bauteile oder Baugruppen ein Bauteil (27) angeordnet ist, dessen Länge und/oder Geometrie durch spanende Bearbeitung exakt hergestellt wird.

10. Verfahren nach wenigstens einem der vorangegangenen Ansprüche,
**dadurch gekennzeichnet, daß** wenigstens ein Bauteil (6) von einem Hohlprofil mit wenigstens zwei übereinander angeordneten Kammern (12, 15) gebildet wird, wobei wenigstens eine Kammer im Verbindungsbereich mit einem anderen Bauteil (8) zur Bildung einer Anlagefläche auf einem Teil ihrer Länge entfernt wird.

11. Rahmen für ein Fahrzeug, **dadurch gekennzeichnet, dass** der Rahmen als Bodengruppe ausgebildet ist und von Trägern aus Strangprofilen gebildet wird, die entsprechend ihrer Anordnung in Fahrzeuglängsrichtung in einen vorderen, einen mittleren und einen hinteren Träger (4 bzw. 6 bzw. 8) unterteilt sind, wobei vorderer und hinterer Träger (4 bzw. 8) überlappend auf dem mittleren Träger (6) aufliegen, die Ebenen der Anlageflächen (M, N) zwischen vorderem und mittlerem Träger (4, 6) einerseits und mittlerem und hinterem Träger (6, 8) andererseits als konstruktiv festgelegte Bezugsebenen definiert sind und vor dem Verbinden der Träger (4, 6, 8) ein Toleranzausgleich durch Verschiebung entlang der Anlageflächen (M, N) erfolgt.

12. Rahmen nach Anspruch 11, **dadurch gekennzeichnet, dass** durch Verwendung von Mehrkammer-Hohlprofilen (6) die Lage der Anlageflächen (N) in Richtung der Fahrzeughochachse durch Abtrennen einer oder mehrerer Kammern (12) variiert werden kann.

## Claims

1. A method of producing a frame (20) made up of individual components, preferably extruded profiles, connected along abutment surfaces (A to N),
**characterised in that**
- firstly, those first components of the frame whose length is defined by structurally determined reference planes (A to N) are clamped in a device, wherein at least some of the reference planes (A to N) form abutment surfaces for other components,
- next the other components are inserted in the device after they have been brought into the set position by shifting along overlapping abutment surfaces formed by the reference planes (A to N) and
- finally the components are joined.

2. A method according to claim 1,
**characterised in that** the components form sub-assemblies within which the abutment surfaces extend in a family of parallel planes, and the other components are shifted in the plane of the respective abutment surface before being joined.

3. A method according to claim 1,
**characterised in that** the components form sub-assemblies within which the abutment surfaces extend in two intersecting families of parallel planes, and before being joined the other components are shifted along the line of intersection between the respective planes.

4. A method according to claim 3,
**characterised in that** at least one additional abutment surface extends in a family of planes at right angles to the line of intersection.

5. A method according to claim 4,
**characterised in that** the abutment surfaces extend in three families of parallel planes at right angles to one another.

6. A method according to any of the preceding claims,
**characterised in that** the join is made by welding.

7. A method according to any of the preceding claims,
**characterised in that** two adjoining walls of a component (31; 33) form abutment surfaces (E, G; K, L).

8. A method according to any of the preceding claims,
**characterised in that** the wall of a component (30) opposite an abutment surface (H) of the same component (30) forms another abutment surface (E) which is partly removed by metal-cutting in order to keep to a preset spacing.

9. A method according to any of the preceding claims,
**characterised in that** a component (27) having an exact length and/or shape obtained by metal-cutting is disposed between the abutment surfaces (E) of two components or sub-assemblies.

10. A method according to at least one of the preceding claims,
**characterised in that** at least one component (6) is formed by a hollow profile having at least two overlapping chambers (12, 15), wherein at least one chamber is removed along part of its length to form an abutment surface at the place of connection to another component (8).

11. A frame for a vehicle **characterised in that** the frame is in the form of a floor assembly and made up of extruded-profile bearers which, corresponding to their arrangement in the longitudinal direction of the vehicle, are divided into a front, a middle and a rear bearer (4 or 6 or 8), wherein the front and rear bearers (4 or 8) overlap and rest on the middle bearer (6), the planes of the abutment surfaces (M, N) between the front and middle bearer (4, 6) on the one hand and the middle and rear bearer (6, 8) on the other hand are defined as reference planes determined by the construction, and before the bearers (4, 6, 8) are joined, the tolerance is compensated by shifting along the abutment surfaces (M, N).

12. A frame according to claim 11, **characterised in that** the position of the abutment surfaces (N) in the direction of the vertical axis of the vehicle can be varied by removing one or more chambers (12) when multichamber hollow profiles (6) are used.

## Revendications

1. Procédé de fabrication d'un châssis (20) composé d'éléments distincts, de préférence de profilés filés, qui sont assemblés les uns aux autres le long de surfaces d'appui (A à N),
**caractérisé en ce que**
- on bride tout d'abord dans un dispositif les premiers éléments du châssis dont la position est définie par des plans de référence (A à N) fixés par construction, au moins une partie des plans de référence (A à N) formant des surfaces d'appui pour d'autres éléments,
- on place ensuite les autres éléments dans le dispositif après qu'ils ont été mis en place dans leur position de consigne par translation le long de surfaces d'appui disposées à recouvrement, formées par les plans de référence (A à N) et
- on assemble ensuite les éléments les uns aux autres.

2. Procédé selon la revendication 1,
**caractérisé en ce que**
les éléments forment des sous-ensembles à l'intérieur desquels les surfaces d'appui sont contenues dans une famille de plans parallèles et, avant l'assemblage, on déplace les autres éléments en translation dans le plan de leur surface d'appui.

3. Procédé selon la revendication 1,
**caractérisé en ce que**
les éléments forment des sous-ensembles à l'intérieur desquels les surfaces d'appui sont contenues dans deux familles de plans parallèles qui se coupent et, avant l'assemblage, on déplace les autres éléments en translation le long de la droite d'intersection de leurs plans.

4. Procédé selon la revendication 3,
**caractérisé en ce qu'**
au moins une autre surface d'appui contenue dans une famille de plans s'étend perpendiculairement à la droite d'intersection.

5. Procédé selon la revendication 4,
**caractérisé en ce que**
les surfaces d'appui sont contenues dans trois familles de plans parallèles qui sont perpendiculaires entre elles.

6. Procédé selon l'une des revendications précédentes,
**caractérisé en ce que**
l'assemblage s'effectue par soudage.

7. Procédé selon l'une des revendications précédentes,
**caractérisé en ce que**
deux parois adjacentes d'un élément (31 ; 33) forment des surfaces d'appui (E, G ; K, L).

8. Procédé selon l'une des revendications précédentes,
**caractérisé en ce que**
la paroi d'un élément (30) qui fait face à une surface d'appui (H) du même élément (30) forme une autre surface d'appui (E) qui est enlevée au moins en partie par usinage par enlèvement de copeaux pour conserver une cote d'écartement prédéterminée.

9. Procédé selon l'une des revendications précédentes,
**caractérisé en ce qu'**
entre les surfaces d'appui (E) de deux éléments ou sous-ensembles, est disposé un élément (27) dont la longueur et/ou la géométrie sont obtenues avec précision par usinage par enlèvement de copeaux.

10. Procédé selon au moins l'une des revendications précédentes,
**caractérisé en ce qu'**
au moins un élément (6) est formé d'un profilé creux possédant au moins deux chambres (12, 15) disposées l'une au-dessus de l'autre, au moins une chambre située dans la région de l'assemblage avec un autre élément (8) étant enlevée sur une partie de sa longueur pour former une surface d'appui.

11. Châssis pour véhicule,
**caractérisé en ce que**
le châssis constitue un groupe plancher et est formé de poutres faites à partir de profilés filés et qui sont réparties en une poutre avant, une poutre centrale et une poutre arrière (4, 6, 8), selon leur disposition dans la direction longitudinale du véhicule, les poutres avant et arrière (4, 8) reposant sur la poutre centrale (6) avec recouvrement, les plans des surfaces d'appui (M, N) entre les poutres avant et centrale (4, 6), d'une part, et entre les poutres centrale et arrière (6, 8), d'autre part, constituant des plans de référence fixés par construction, et une compensation de tolérances étant effectuée par translation le long des surfaces d'appui (M, N) avant l'assemblage des poutres (4, 6, 8).

12. Châssis selon la revendication 11,
**caractérisé en ce que**
grâce à l'utilisation de profilés creux à chambres multiples (6), on peut modifier la position des surfaces d'appui (N) selon l'axe vertical du véhicule en enlevant une ou plusieurs chambres (12).
